# EUROPEAN PATENT APPLICATION

(11) **EP 4 579 914 A1**
(43) Date of publication of application: **02.07.2025**
(21) Application number: 24205886.5
(22) Date of filing: 10.10.2024
(51) Int. Cl.: H01M 50/342, H01M 50/358, H01M 50/143, H01M 50/152, H01M 50/213, H01M 50/291, H01M 50/559

(54) **COVER PLATE, BATTERY, AND BATTERY PACK**

(30) Priority: 29.12.2023 WO PCT/CN2023/143532
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: HUANG, Liming, Guangdong 516039 (CN); MIN, Changfei, Guangdong 516039 (CN); LIU, Rongwei, Guangdong 516039 (CN); XU, Yuebin, Guangdong 516039 (CN); HE, Wei, Guangdong 516039 (CN); LIU, Jincheng, Guangdong 516039 (CN)
(74) Representative: Murgitroyd & Company

(57) **Abstract**

A cover plate, a battery, and a battery pack are provided. The cover plate includes a body (111) and an explosion-proof (120). The body includes a first sub-part (113) and a second sub-part (114). The second sub-part (114) includes a sinking table (1141) and a boss (1142) connected. The second sub-part (114) includes a first side surface (1143) and a second side surface (1144) disposed oppositely. The boss (1142) is higher than the sinking table (1141) and the first sub-part (113). The explosion-proof groove (120) is disposed on the first side surface (1143). A first sub-groove (121) of the explosion-proof groove (120) is at least partially located on the sinking table (1141). A second sub-groove (122) of the explosion-proof groove (120) is located on the boss (1142).

## Description

### TECHNICAL FIELD

The present application relates to the field of battery technologies, and, more particularly, to a cover plate, a battery, and a battery pack.

### BACKGROUND

During the use of power batteries, air pressure inside the batteries may rise to exceed a safe value due to short circuits or other reasons, resulting in hidden dangers such as explosion. Explosion-proof structures are generally installed on cover plates of the battery to minimize the hidden dangers as much as possible. The explosion-proof structures gradually deform with increasing internal pressure until the explosion-proof structures burst. When the explosion-proof structures burst, substances in the batteries will be ejected. Since a burst direction of the explosion-proof structures is uncertain, a flow direction of the ejected substances is also uncertain. The ejected substances may randomly flow to surrounding batteries, affecting the surrounding batteries and expanding an influence scope of thermal runaway.

### SUMMARY

A cover plate, a battery, and a battery pack are provided to solve a problem that a burst direction of explosion-proof structures in the related technology is uncertain.

In a first aspect, a cover plate is provided. The cover plate is applied to a battery and includes a body and an explosion-proof groove. The body includes a first sub-part and a second sub-part adjacent to the first sub-part. The first sub-part is adjacent to an edge of the body in a radial direction of the body. The second sub-part includes a sinking table and a boss connected. The sinking table and the boss are located on a same circumference. The second sub-part further includes a first side surface and a second side surface disposed oppositely. The boss is higher than the sinking table and the first sub-part in a direction from the second side surface to the first side surface. The explosion-proof groove includes a first sub-groove and a second sub-groove. The first sub-groove is at least partially located on the sinking table, and the second sub-groove is located on the boss.

In a second aspect, a battery is provided. The battery includes the cover plate above-mentioned, a wound core, and a housing. The wound core includes a positive end and a negative end. The wound core is installed inside the housing. One end of the housing is provided with an opening. The body is sealed and connected to the housing to seal the opening.

In a third aspect, a battery pack is provided. The battery pack includes a plurality of the above-mentioned batteries.

The beneficial effects of the present application are illustrated below. A cover plate, a battery, and a battery pack are provided. The cover plate includes a body and an explosion-proof groove. The body includes a first sub-part and a second sub-part adjacent to the first sub-part. The explosion-proof groove is disposed on the second sub-part. The second sub-part includes a sinking table and a boss. The boss is higher than the sinking table and the first sub-part. The first sub-groove is located on the sinking table, and the second sub-groove is located on the boss. When the cover plate is pressure relieved, the sinking table is subjected to a greater force, and the explosion-proof groove bursts first from the sinking table, thereby the problem of the burst direction of explosion-proof structures in the related technology being uncertain is solved, and a directional burst of the cover plate is realized when the cover plate is pressure relieved.

### BRIEF DESCRIPTION OF THE DRAWINGS

FIG. 1 is a top view of a cover plate provided by some embodiments of the present application.
FIG. 2 is a cross-sectional view of the cover plate shown in FIG. 2 along A-A.
FIG. 3 is a partial enlarged view at a position B shown in FIG. 1.
FIG. 4 is a cross-sectional view of the cover plate shown in FIG. 3 along B-B.
FIG. 5 is a partial enlarged view at a position D shown in FIG. 4.
FIG. 6 is a cross-sectional view of the cover plate shown in FIG. 3 along E-E.
FIG. 7 is an annotation view of the cover plate provided by some embodiments of the present application.
FIG. 8 is a three-dimensional view of the cover plate provided by some embodiments of the present application.
FIG. 9 is a three-dimensional view of a battery provided by some embodiments of the present application.
FIG. 10 is a top view of the battery provided by some embodiments of the present application.
FIG. 11 is a cross-sectional view of the battery shown in FIG. 10 along G-G.
FIG. 12 is a partial enlarged view at a position H shown in FIG. 11.
FIG. 13 is a partial enlarged view at a position M shown in FIG. 11.
FIG. 14 is a three-dimensional view of a battery pack provided by some embodiments of the present application.
FIG. 15 is a side view of the battery pack shown in FIG. 14.
FIG. 16 is a cross-sectional view of the battery pack shown in FIG. 15 along H-H.

### Reference numerals:

100, battery; 110, cover plate; 111, body; 113, first sub-part; 114, second sub-part; 1141, sinking table; 1142, boss; 1143, first side surface; 1144, second side surface; 115, third sub-part; 116, fourth sub-part; 120, explosion-proof groove; 121, first sub-groove; 1211, first groove wall; 1212, second groove wall; 122, second sub-groove; 130, mounting base; 131, mounting groove; 132, baffle plate; 133, first sub-plate; 134, second sub-plate; 140, wound core; 150, housing; 151, opening; 152, positive terminal; 153, flange; 154, pressing plate; 155, sealing member; 160, first current collector; 170, second collector plate; 180, insulating member.

### DETAILED DESCRIPTION

A cover plate, a battery, and a battery pack are provided by the embodiments of the present application, to solve a problem that a burst direction of explosion-proof structures in the related technology is uncertain. The following will be explained in conjunction with the attached drawings.

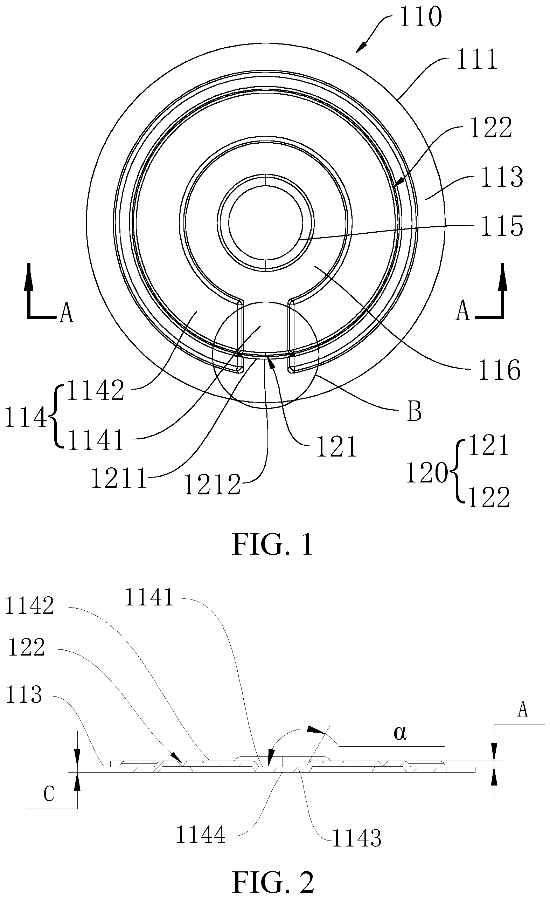

Referring to FIGs. 1, 2, and 8, embodiments of the present application provides a cover plate 110 including a body 111 and an explosion-proof groove 120.

In the embodiments, the body 111 includes a first sub-part 113 and a second sub-part 114. The first sub-part 113 is adjacent to the second sub-part 114. The first sub-part 113 is adjacent to an edge of the body 111 along a radial direction of the body 111. The second sub-part 114 includes a sinking table 1141 and a boss 1142 connected. The sinking table 1141 is located on a same circumference as the boss 1142. The second sub-part 114 includes a first side surface 1143 and a second side surface 1144 disposed oppositely. The first side surface 1143 is a surface of the second sub-part 114 facing away from the wound core 140, and the second side surface 1144 is a surface of the second sub-part 114 facing the wound core 140. The boss 1142 is higher than the sinking table 1141 and the first sub-part 113. The explosion-proof groove 120 is provided on the first side surface 1143 or the second side surface 1144. The explosion-proof groove 120 includes a first sub-groove 121 and a second sub-groove 122 communicated. The first sub-groove 121 is at least partially located on the sinking table 1141, and the second sub-groove 122 is located on the boss 1142.

In the embodiments, the second sub-part 114 is provided on the body 111. The second sub-part 114 includes the boss 1142 and the sinking table 1141. The boss 1142 is higher than the sinking table 1141 and the first sub-part 113. The first side surface 1143 of the boss 1142 is higher than the first side surface 1143 of the sinking table 1141, and the second side surface 1144 of the boss 1142 is higher than the second side surface 1144 of the sinking table 1141. When the cover plate 110 is pressure relieved, the sinking table 1141 is subjected to a greater force, and the explosion-proof groove 120 bursts first from the sinking table 1141, thereby solving a problem that a burst direction of explosion-proof structures in the related technology is uncertain, and realizing a directional burst of the cover plate 110 when the cover plate 110 is pressure relieved. The explosion-proof groove 120 bursts first from the sinking table 1141, and has a variety of burst modes, such as the first sub-groove 121 on the sinking table 1141 is instantaneously fully burst, or the first sub-groove 121 has a burst point and bursts from the burst point until the first sub-groove 121 completely bursts. The burst point may be a junction on the first sub-groove 121 between the boss 1142 and the sinking table 1141, or may be any position on the first sub-groove 121 in an area of the sinking table 1141.

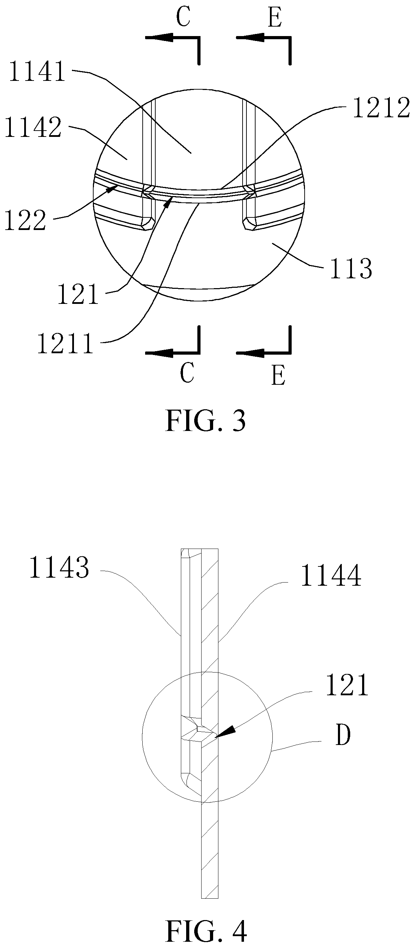

In some embodiments, referring to FIG. 2 and FIG. 4, a surface of the first sub-part 113 facing the wound core 140 and a surface of the sinking table 1141 facing the wound core 140 are at a same height. A surface of the first sub-part 113 facing away from the wound core 140 and a surface of the sinking table 1141 facing away from the wound core 140 are at a same height. When the cover plate 110 is pressure relieved, the sinking table 1141 is subjected to the greater force, and the explosion-proof groove 120 bursts first from the sinking table 1141, which is conducive to the directional burst of the explosion-proof groove 120.

In some embodiments, referring to FIG. 1, the body 111 further includes a third sub-part 115. Shapes of the first sub-part 113 and the second sub-part 114 are both annular. A shape of the third sub-part 115 is circular. Along the radial direction of the body 111, the first sub-part 113, the second sub-part 114, and the third sub-part 115 are concentric in sequence. The sinking table 1141 and the boss 1142 are enclosed in a closed annular shape.

It may be understood that in this embodiment, the shape of the second sub-part 114 is a circular ring. The second sub-part 114 is composed of two parts, including the sinking table 1141 and the boss 1142. The sinking table 1141 and the boss 1142 are both arc-shaped rings. Inner and outer diameters of the sinking table 1141 and the boss 1142 are the same. When the cover plate 110 is in use, the first sub-part 113 of the cover plate 110 is pressed and fixed by other components of the battery. When air pressure inside the battery increases, the cover plate 110 deforms, and the third sub-part 115 protrudes outward and deforms. Two sides of the second sub-part 114 are applied forces in different directions by the first sub-part 113 and the third sub-part 115, respectively, so that the first sub-part 114 is split at the explosion-proof groove 120, which is beneficial for the directional burst of the explosion-proof groove 120.

In some embodiments, referring to FIG. 1, the body 111 further includes a fourth sub-part 116. A shape of the fourth sub-part 116 is annular. The fourth sub-part 116 is located between the second sub-part 114 and the third sub-part 115. The fourth sub-part 116 is connected to the second sub-part 114 and the third sub-part 115.

When the cover plate 110 deforms under pressure, the cover plate 110 bulges upwards to form a hemispherical-shape or a hat-shape, and a space between the cover plate 110 and one end of a battery cell is increased, thereby preventing the air pressure in the battery from increasing sharply and causing the battery to explode. In addition, the explosion-proof groove 120 is further provided on the second sub-part 114. During a deformation process of the cover plate 110, deformation forces of the first sub-part 113 and the fourth sub-part 116 act on the explosion-proof groove 120, so that the explosion-proof groove 120 bursts smoothly, and the reliability of the explosion-proof structure is improved.

In some embodiments, a surface of the first sub-part 113 facing the wound core 140, a surface of the sinking table 1141 facing the wound core 140, and a surface of the fourth sub-part 116 facing the wound core 140 are at a same height. In addition, a surface of the first sub-part 113 facing away from the wound core 140, a surface of the sinking table 1141 facing away from the wound core 140, and a surface of the fourth sub-part 116 facing away from the wound core 140 are at a same height.

It may be understood that in the embodiments, when the boss 1142 deforms, a force generated between the first sub-part 113 and the boss 1142 acts on the body 111 at a position of the second sub-groove 122, which is conducive to the burst of the second sub-groove 122, and ensuring the explosion effect.

In some embodiments, a surface of the first sub-part 113 facing the wound core 140 and a surface of the sinking table 1141 facing the wound core 140 are both higher than a surface of the fourth sub-part 116 facing the wound core 140. The fourth sub-part 116 is configured to contact an electrode of the battery. In addition, a surface of the first sub-part 113 facing away from the wound core 140 and a surface of the sinking table 1141 facing away from the wound core 140 are both higher than a surface of the fourth sub-part 116 facing the wound core 140.

It may be understood that the fourth sub-part 116 belongs to a part of the cover plate 110 closest to the battery cell. The fourth sub-part 116 is attached and connected to the electrode. An electric potential of the fourth sub-part 116 and an electric potential of the electrode are same. When the cover plate 110 is in contact with the housing 150, there is no electric potential difference between the battery cover plate 110 and the housing 150, thereby reducing a risk of the cover plate 110 being corroded, and improving the reliability of the battery.

In some embodiments, the surface of the third sub-part 115 facing the wound core 140 is not lower than a surface of the boss 1142 facing the wound core 140. A surface of the third sub-part 115 facing away from the wound core 140 is not lower than a surface of the boss 1142 facing away from the wound core 140.

It may be understood that the cover plate 110 has an uneven structure, and the third sub-part 115 is provided to a highest position. With the air pressure in the battery increasing, the cover plate 110 deforms, and the third sub-part 115 protrudes outward and deforms to increase a space of the cover plate 110 after deforming as much as possible, which is conducive to the burst of the explosion-proof groove 120, and preventing the cover plate 110 from exploding.

In some embodiments, along a thickness direction of the cover plate 110, a cross-sectional shape of the explosion-proof groove 120 is V-shaped, trapezoidal, or "U"-shaped. The cross-sectional shape of the explosion-proof groove 120 may be set as needed.

In some embodiments, a material of the cover plate 110 may be steel, such as SPCC material and stainless-steel material. The stainless-steel material may be SUS410, SUS306, SUS316, SUS430, SUS444, etc. When the SPCC material is used, nickel may be plated on both sides of the cover plate 110. A thickness of each of plating layers may range from 0.3 µm to 8 µm. The thicknesses of the plating layers on both sides may be the same or different.

In some embodiments, referring to FIG. 1, the shape of the explosion-proof groove 120 is a closed circular ring in a top view direction of the cover plate 110.

It may be understood that the shape of the explosion-proof groove 120 is a closed circular ring. When the cover plate 110 is pressure relieved, a part of the cover plate 110 inside the explosion-proof groove 120 is completely separated from a part of the cover plate 110 outside the explosion-proof groove 120, so that the explosion-proof structure completely bursts and the pressure relief is unobstructed, thereby ensuring the explosion-proof effect.

In some embodiments, referring to FIG. 1 and FIG. 2, a depth of the sinking table 1141 is A. The A satisfies 0.8*C≤A≤1.5*C, where the C is a thickness of an area other than the explosion-proof groove 120 on the body 111. In some embodiments, the A satisfies 1*C≤A≤1.3*C, and the A may be 0.8*C, 0.9*C, 1.0*C, 1.1*C, 1.2*C, 1.3*C, 1.4*C, 1.5*C, or other unspecified values.

It may be understood that the body 111 is integrally formed. The value of the depth A of the sinking table 1141 is associated with the thickness of the body 111, so as to avoid significant differences between the depth of sinking table 1141 and the thickness of body 111, which is not conducive to processing. This ensures that the sinking table 1141 is formed and the processing process is simple.

In some embodiments, a thickness of the area other than the explosion-proof groove 120 on the body 111 is C, and the C satisfies 0.4 mm≤C≤1.0 mm. A value of the C may be 0.4 mm, 0.5 mm, 0.6 mm, 0.7 mm, 0.8 mm, 0.9 mm, 1.0 mm, or other unspecified values.

It may be understood that the thicker the thickness of the body 111, the better a structural strength of the cover plate 110, but the greater the pressure required to burst the explosion-proof groove 120. In the embodiments of the present application, the thickness of the body 111 is designed within a reasonable range, so that the structural strength of the cover plate 110 and the burst pressure of the explosion-proof groove 120 are taken into account, thereby improving an overall performance of the cover plate 110.

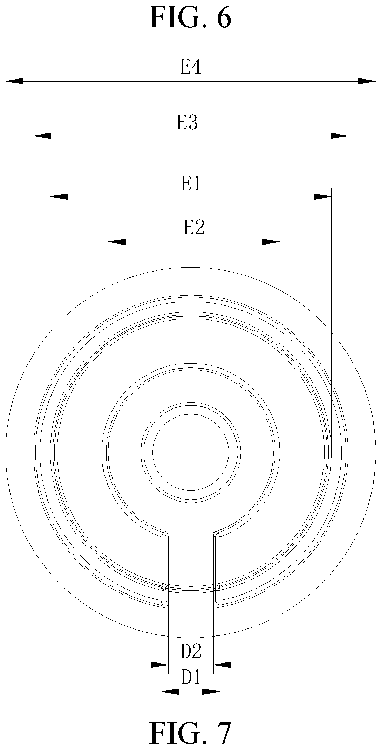

In some embodiments, referring to FIG. 1 and FIG. 7, a width of a top of the sinking table 1141 is D1, a width of a bottom of the sinking table 1141 is D2, the thickness of the area on the body 111 other than the explosion-proof groove 120 is C, and an angle defined between the bottom and a side of the sinking table 1141 is α. The D1, the D2, the C, and the α satisfy 4 mm≤D1≤12 mm, D2=D1-2*C*tan (α-90°), D2>2 mm, and 100°≤α≤170°.

For example, a value of the D1 may be 4 mm, 5 mm, 6 mm, 7 mm, 8 mm, 9 mm, 10 mm, 11 mm, 12 mm, or other unspecified values. A value of the α may be 100°, 110°, 120°, 130°, 140°, 150°, 160°, 170°, or other unspecified values. The width D2 of the bottom can be calculated from the D1 and the α.

It may be understood that the larger the D1 and the D2 of the sinking table 1141, the larger the area for the directional burst, which can realize rapid pressure relief and prevent the battery from exploding. However, if the D1 and the D2 of the sinking table 1141 are too large, an area of battery liquid splashing is also larger, which affects the surrounding batteries. In the embodiments of the present application, a size of the sinking table 1141 is reasonably set to ensure the directional burst and the pressure relief effect of the explosion-proof structure.

In some embodiments, referring to FIG. 7, in a top view direction of the body 111, an outer diameter of the circular ring where the explosion-proof groove 120 located is E1, an inner diameter of the second sub-part 114 is E2, an outer diameter of the second sub-part 114 is E3, and a diameter of the body 111 is E4. The E4 satisfies 42 mm≤E4≤46 mm. For example, a value of the E4 can be 42 mm, 43 mm, 44 mm, 45 mm, 46 mm, or other unspecified values.

The E2 and the E3 satisfy 0.75*E4≤E3≤0.96*E4, 0.4*E4≤E2≤0.72*E4, and 3*C≤E3-E2≤22.8*C, where the C is the thickness of the area on the body 111 other than the explosion-proof groove 120.

It may be understood that in the embodiments of the present application, the diameter E4 of the body 111 is related to corresponding battery product specifications, the E2 and the E3 are related to the E4, the E1 is related to the E2 and the E3, and a structural size of the cover plate 110 is reasonably designed. An area of the second sub-part 114 is reasonably set to facilitate the processing of the explosion-proof groove 120. The larger the E1, the larger the burst area of the explosion-proof groove 120, and the better the pressure relief effect.

Based on the above-described embodiments, the thickness of the body 111 at a position where the explosion-proof groove 120 is located is H, and the H satisfies 50 µm≤H≤120 µm.

It may be understood that the thicker the thickness of the body 111 at the position where the explosion-proof groove 120 is located, the greater the pressure required for bursting the explosion-proof groove 120. The thickness of the body 111 at the position where the explosion-proof groove 120 is located is positively correlated with the pressure required for bursting the explosion-proof groove 120. If the thickness of the body 111 at the position where the explosion-proof groove 120 is located is thinner, the explosion-proof groove 120 may be burst within a normal operating range of the battery, affecting the performance of the battery. If the thickness of the body 111 at the position where the explosion-proof groove 120 is located is thicker, the pressure required for bursting the explosion-proof groove 120 is greater, and the battery is prone to explosion. In the embodiments of the present application, a thickness of the first sub-groove 121 is the same as a thickness of the second sub-groove 122. The thickness of the body 111 at the position where the explosion-proof groove 120 is located may be 50 µm, 60 µm, 70 µm, 80 µm, 90 µ m, 100 µm, 110 µm, 120 µm, or other unspecified values. A thickness range of the body 111 where the explosion-proof groove 120 is located is designed reasonably, which prevents the battery from exploding while ensuring the normal operation of the battery.

In some embodiments, referring to FIG. 6, a width of a groove opening of the explosion-proof groove 120 is a, and the a satisfies 0.6 mm≤a≤1.5 mm. A value of the a may be 0.6 mm, 0.7 mm, 0.8 mm, 0.9 mm, 1.0 mm, 1.1 mm, 1.2 mm, 1.3 mm, 1.4 mm, 1.5 mm, or other unspecified values.

It may be understood that the width of the groove opening of the explosion-proof groove 120 is reasonably designed, which is conducive to the processing and forming of the explosion-proof groove 120 on the second sub-part 114.

In some embodiments, a ratio of an arc length of the first sub-groove 121 to an arc length of the second sub-groove 122 is G, and the G satisfies 1/20≤G≤1/7. A value of G may be 1/20, 1/19, 1/18, 1/17, 1/16, 1/15, 1/14, 1/13, 1/12, 1/11, 1/10, 1/9, 1/8, 1/7, or other unspecified values.

The arc lengths of the first sub-grooves 121 and the second sub-grooves 122 are reasonably arranged, and burst sizes of a primary pressure relief and a secondary pressure relief are reasonably arranged, so as to ensure the explosion-proof effect.

In some embodiments, the thickness of the body 111 where the explosion-proof groove 120 is located is H, and the H satisfies H=(P*E1)/(4*Q). The E1 is the outer diameter of the ring where the explosion-proof groove 120 is located, the P is the burst pressure of the cover plate 110 at the explosion-proof groove 120, and the Q is a tensile strength of a material prepared for the cover plate 110.

The thickness H of the body 111 where the explosion-proof groove 120 is located can be designed according to the required pressure, the material made of the cover plate 110, and a circumference of the explosion-proof groove 120. The design is simple and the performance of the cover 110 is guaranteed.

In some embodiments, the thickness of the body 111 at the position of the explosion-proof groove 120 is H, and the H satisfies 50 µm≤H≤120 µm. A depth of the first sub-groove 121 is the same as a depth of the second sub-groove 122. A value of the H may be 50 µm, 60 µm, 70 µm, 80 µm, 90 µm, 100 µm, 110 µm, 120. µm, or other unspecified values.

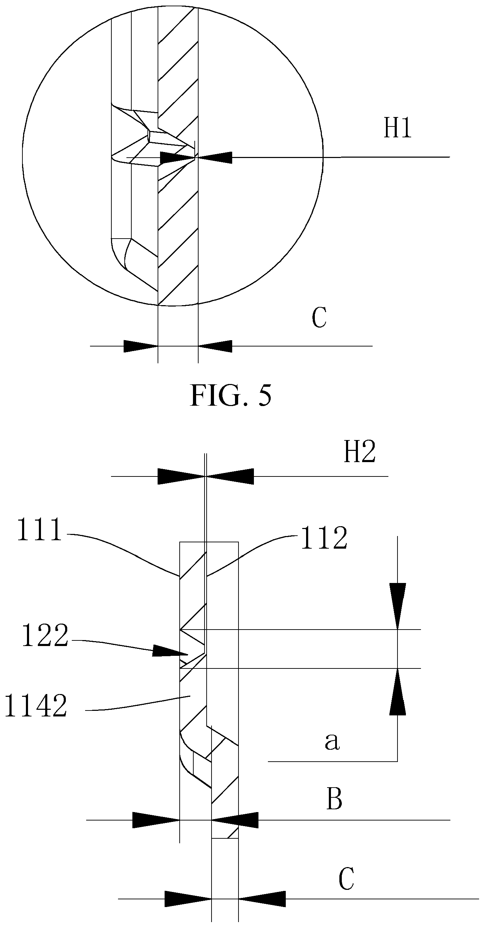

In some embodiments, as shown in FIG. 5 and FIG. 6, the thickness of the body 111 at the position where the first sub-groove 121 is located is H1, the thickness of the body 111 at the position of the second sub-groove 122 is H2, and the H1 is less than the H2.

It may be understood that the first sub-groove 121 and the second sub-groove 122 are provided on the first side surface 1143. By providing the first sub-groove 121 and the second sub-groove 122 on the body 111, the thickness of the body 111 at the position of the first sub-groove 121 is less than the thickness of the body 111 at the position of the second sub-groove 122. When internal pressure of the battery is increasing, the position of the first sub-groove 121 bursts first, and the position of the second sub-groove 122 on the body 111 bursts again to form the secondary pressure relief of the battery. The first burst can discharge combustible gases, and the second burst can discharge combustion-supporting gases, thereby achieving a purpose of timely discharge of the combustible gases and the combustion-supporting gases. This overcomes the problem of the battery explosion caused by the interaction between the combustible gases, the combustion-supporting gases, and substances inside the battery when the explosion-proof structures in the related technologies explode. After the body 111 at the position of the first sub-groove 121 bursts, the body 111 at the position of the second sub-groove 122 from a connection between the first sub-groove 121 and the second sub-groove 122 is broken through, which is conducive to the burst of the body 111 at the position of the second sub groove 122, thereby improving the reliability of the cover plate 110 and ensuring the explosion-proof effect.

In some embodiments, referring to FIG. 5 and FIG. 6, the thickness of the body 111 at the position of the first sub-groove 121 is H1, and the thickness of the body 111 at the position of the second sub-groove 122 is H2. The H1 and the H2 satisfy 20 µm≤H1≤115 µm, 25 µm≤H2≤135 µm, and 5 µm≤H2-H1≤20 µ m. In some embodiments, the H1 and the H2 satisfy 45 µm≤H1≤55 µm and 80 µ m ≤H2≤100 µm. A value of the H1 may be 20 µm, 30 µm, 40 µm, 50 µm, 60 µ m, 70 µm, 80 µm, 90 µm, 100 µm, 110 µm, 115 µm, or other unspecified values. A value of the H2 may be 25 µm, 35 µm, 45 µm, 55 µm, 65 µm, 75 µm, 85 µm, 95 µm, 105 µm, 115 µm, 125 µm, 135 µm, or other unspecified values. A value of (H2-H1) may be 5 µm, 10 µm, 15 µm, 20 µm, or other unspecified values.

It may be understood that the thickness of the body 111 at the position of the first sub-groove 121 and the thickness of the body 111 at the position of the second sub-groove 122 are positively correlated with the pressure required for bursting the explosion-proof groove 120. The thickness range of the body 111 at the position of the first sub-groove 121 and the thickness of the body 111 at the position of the second sub-groove 122 are reasonably designed to meet the normal operating range of the battery, realize the secondary pressure relief, and prevent the battery from exploding.

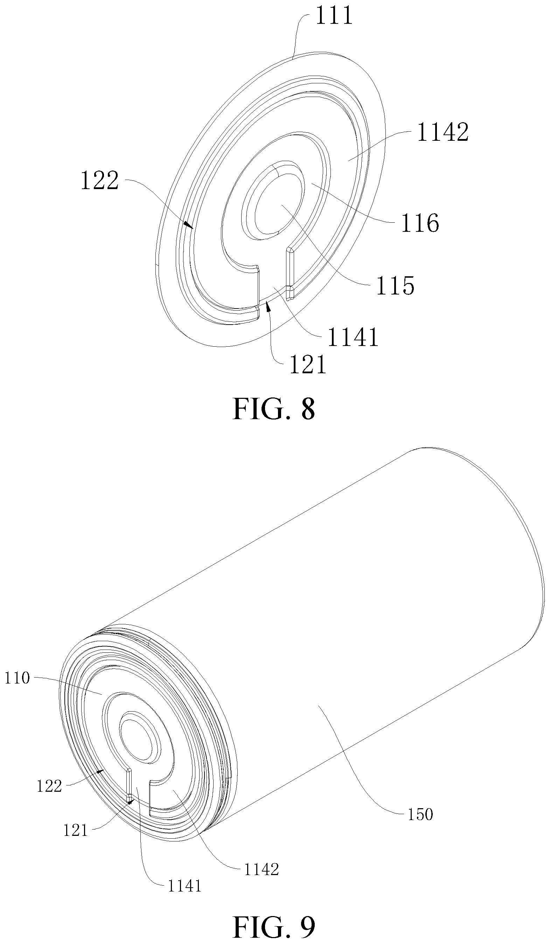

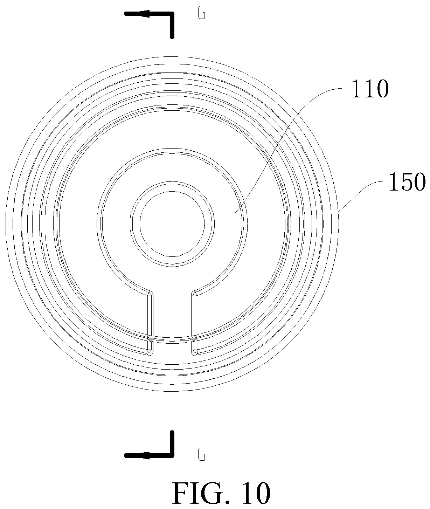

Referring to FIGs. 9, 10, 11, and 12, the embodiments of the present application further provide a battery. The battery is a cylindrical battery including a cover plate 110 of any one of the embodiments mentioned above. The cover plate 110 may be applied to a positive electrode side or a negative electrode side of the battery. Taking as an example that the cover plate 110 is applied to the negative electrode side of the cylindrical battery. The battery includes the cover plate 110 mentioned above, the wound core 140, and the housing 150. The wound core 140 is installed inside the housing 150. An opening 151 is provided at one end of the housing 150. The cover plate 110 is sealed and connected to the housing 150 to seal the opening 151. The battery has the same technical effects as the explosion-proof structure of the battery, which will not be repeated herein.

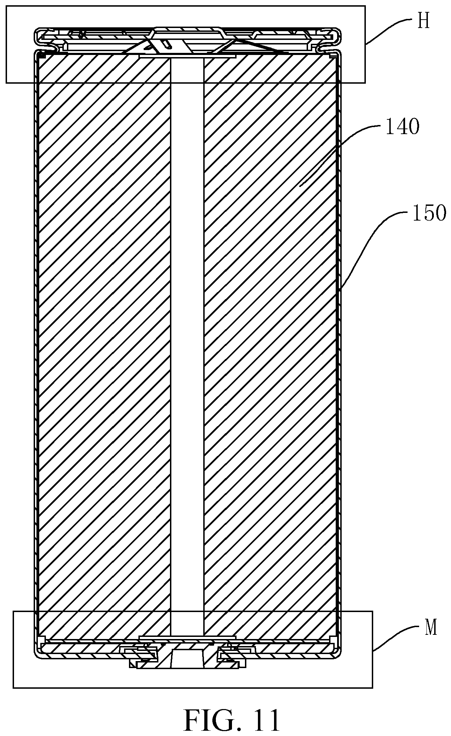

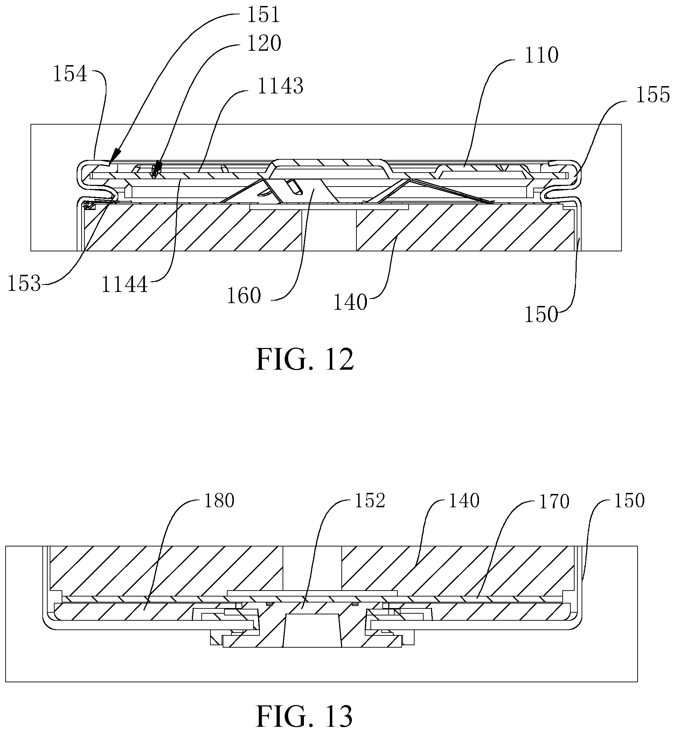

Based on the above-mentioned embodiments, referring to FIG. 11 and FIG. 12, the battery further includes a first current collector 160, a second current collector 170, and an insulating member 180. Another end of the housing 150 is provided with a positive terminal 152. The wound core 140, the first current collector 160, and the second current collector 170 are all disposed inside the housing 150. The cover plate 110 is sealed and connected to the housing 150 to seal the opening 151. The second side surface 1144 of the cover plate 110 is in contact with one side of the first current collector 160, and another side surface of the first current collector 160 is welded with the negative terminal of the wound core 140. A peripheral side of the first current collector 160 is connected to an inner surface of the housing 150, so that the housing 150 is charged. There is no potential difference between the cover plate 110 and the housing 150, thereby reducing a risk of the cover plate 110 being corroded, and improving the reliability of the battery. One end of the housing 150 charged and facing away from the cover plate 110 is provided with the positive terminal 152. The positive terminal 152 is sealed and connected to the housing 150 through a sealing ring. The second current collector 170 is welded with the wound core 140 and the positive terminal 152. The second current collector 170 is disposed between a positive end and the positive terminal 152 of the wound core 140. In addition, the insulating member 180 is disposed between the second current collector 170 and the end of the housing 150 to insulates the second current collector 170 and the housing 150.

In some embodiments, a part of a side wall of the housing 150 adjacent to the opening 151 shrinks inward to form a flange 153. The opening 151 of the housing 150 is provided with a pressing plate 154 relatively spaced from the flange 153. The cover plate 110 is installed between the flange 153 and the pressing plate 154. A sealing member 155 is provided between the cover plate 110, the flange 153, and the pressing plate 154 to ensure the sealing ability of the cover plate 110. The sealing member 155 is a sealing ring, and a compression ratio of the sealing ring ranges from 30% to 70%, thereby improving the pressure relief effect of the explosion-proof structure.

In other embodiments, the cover plate 110 and the housing 150 are connected by laser welding. The laser welding has advantages such as simple processes and good sealing ability. In this case, the first current collector 160 is directly in contact with the housing 150. Further, the first current collector 160 can also be directly in contact with the cover plate 110, so that the housing 150 is negatively charged.

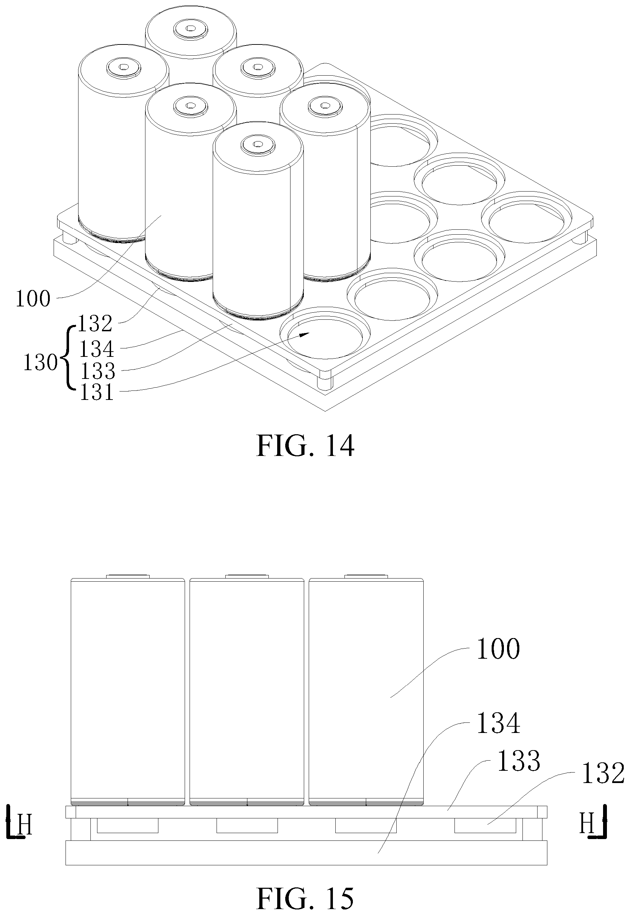

Referring to FIG. 14, the embodiments of the present application further provide a battery pack including the batteries mentioned above.

In some embodiments, referring to FIGs. 14, 15, and 16, the battery pack further includes a mounting base 130 provided with a plurality of mounting grooves 131 and a plurality of baffle plates 132. The batteries, the mounting grooves 131, and the baffle plates 132 are one-to-one correspond. An end of each of the batteries adjacent to the body 111 is mounted inside a corresponding one of the mounting grooves 131, and each of the baffle plates 132 is located on a side of a corresponding one of the mounting grooves 131 away from the batteries. The first sub-groove 121 includes a first groove wall 1211 and a second groove wall 1212 closer to a center of the body 111 than the first groove wall 1211. A projection of each of the baffle plates 132 on one side of the body 111 is located at one side of the first groove wall 1211 away from the second groove wall 1212. A width of each of the baffle plates 132 is greater than or equal to a length of the first sub-groove 121. The baffle plates 132 may be flat plates or arc-shaped plates.

It may be understood that as the pressure in the batteries 100 increases, the first sub-groove 121 in the sinking table 1141 bursts, and gases and materials in the batteries 100 are ejected from the first sub-groove 121. By providing the baffle plates 132 on the mounting base 130, the baffle plates 132 are located below the sinking table 1141, and a projection of each of the baffle plates 132 on a plane where the cover plate 110 is located is positioned against the sinking table 1141. The baffle plates 132 block the materials ejected from the batteries 100, and prevents the ejected materials from entering the adjacent battery 100 and polluting the adjacent batteries 100.

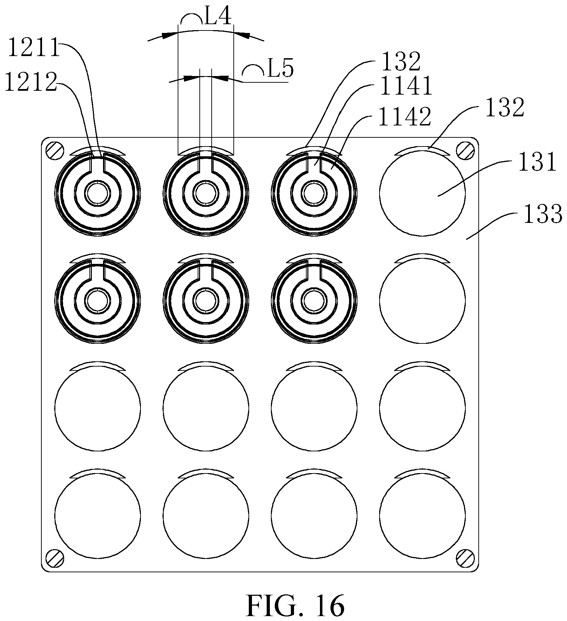

As can be seen from FIG. 16, the baffle plates 132 are arc-shaped plates. An arc length of each of the baffle plates 132 is L4. An arc length of an area where the sinking table 1141 is located is L5. The L4 is greater than or equal to the L5, so that the baffle plates 132 have a larger blocking area and better blocking effects.

Based on the above-described embodiments, referring to FIG. 14, the mounting base 130 includes a first sub-plate 133 and a second sub-plate 134 disposed oppositely and spaced apart. The first sub-plate 133 is connected to the second sub-plate 134. Mounting grooves 131 are provided on the first sub-plate 133. The baffle plates 132 are located between the first sub-plate 133 and the second sub-plate 134, and the baffle plates 132 are connected to the first sub-plate 133. This is convenient for the mounting base 130 to be molded and formed. A gap between the first sub-plate 133 and the second sub-plate 134 can accommodate the materials ejected from the battery, so as to prevent the materials ejected from the battery from affecting other batteries.

The following is a detailed description of the technical solution and technical effects of the present application by specific embodiments and proportions. The following embodiments are only partial embodiments of the present application, and are not specifically limited to the present application.

The embodiments aim to investigate the influence of the explosion-proof structure on the performance of the battery.

### First Test Group

The structure of the cover plate 110 in this test group is as follows: a body 111 includes a first sub-part 113, a second sub-part 114, a third sub-section 115, and a fourth sub-part 116. The second sub-part 114 includes a sinking table 1141 and a boss 1142 connected. The sinking table 1141 is located on a same circumference as the boss 1142. The second sub-part 114 includes a first side surface 1143 and a second side surface 1144 disposed oppositely. The first side surface 1143 is a surface of the second sub-part 114 facing away from the wound core 140, and the second side surface 1144 is a surface of the second sub-part 114 facing the wound core 140. In a direction from the second side surface 1144 to the first side surface 1143, the boss 1142 is higher than the sinking table 1141 and the first sub-part 113. An explosion-proof groove 120 is provided on the first side surface 1143 or the second side surface 1144. The explosion-proof groove 120 includes a first sub-groove 121 and a second sub-groove 122 communicated. The first sub-groove 121 is at least partially located on the sinking table 1141, and the second sub-groove 122 is located on the boss 1142.

This test group adopts a test method described in Article 6.2. 4 of the GB/T31485-2015 standard.

An evaluation criteria adopted by this test group is illustrated below. A burst time of the first sub-groove 121 is T1, a burst time of the second sub-groove 122 is T2, and a burst time difference between the first sub-groove 121 and the second sub-groove 122 is ΔT. The T1 and the T2 meet conditions as follows: 50 seconds≤T1 ≤100 seconds, 60 seconds≤T2≤150 seconds, and 5 seconds≤ΔT≤50 seconds.

It may be understood that when the T1 is too short, within 50 seconds, the battery may have a problem of valve leakage. When the T1 exceeds 100 seconds, the temperature during the burst will be too high, and a large amount of combustible gas will come into contact with air immediately after reaching a flash point. In the embodiment of the present application, the T1 is reasonably set, so that one pressure relief is realized within the T1 period to release the flammable gas.

Parameters involved in the cover plate 110 include H1, H2, H2-H1, a, C, G, A, E1, E2, E3, E4, E3-E2, D1, and D2. The parameters of basic group 1 are shown in Table 1.1 below.

The basic group 1 is set, and the parameters and verification results of the basic group 1 are as shown in Table 1.1 below.

**Table 1.1: Parameters for the basic group 1**

| Parameter Typ e | Value | Parameter Type | Value | Validation Results |
|---|---|---|---|---|
| H1/µm | 115.00 | E1/mm | 26.00 | T1=80 seconds, T2=12 3 seconds, and ΔT=43 seconds |
| H2/µm | 120.00 | E2/mm | 25.00 | |
| (H2-H1)/µm | 5.00 | E3/mm | 31.50 | |
| a/mm | 0.60 | E4/mm | 42.00 | |
| C/mm | 0.40 | (E3-E2) /mm | 6.50 | |
| G | 1/20 | D1/mm | 5.00 | |
| A/mm | 0.32 | D2/mm | 4.20 | |
| | | α | 135° | |

According to the validation results of Table 1.1, while the cover plate 110 is orientated burst, the burst time of the first sub-groove 121 and the burst time of the second sub-groove 122 both meet the evaluation criteria, thereby meeting the performance of the explosion-proof structure, and realizing the secondary pressure relief.

Based on the parameters of the basic group 1, changes of the parameters of the cover plate 110 are controlled by a single variable method to set the comparative examples and examples. The changing parameters and the validation results of the comparative examples and the examples are shown in Table 1.2.

**Table 1.2: Validation results of the proportion and implementation examples of D1 and D2 with D1 changes based on basic group 1**

| | D1/mm | D2/mm | Validate Results |
|---|---|---|---|
| Example 1 | 4.00 | 3.20 | T1=74 seconds, T2=122 sec onds, and ΔT=48 seconds |
| Example 2 | 12.00 | 11.20 | T1=97 seconds, T2=126 sec onds, and ΔT=29 seconds |
| Comparative Example 1 | 1.00 | 0.20 | T1=60 seconds, T2=124 sec onds, and ΔT=64 seconds |
| Comparative Example 2 | 18.00 | 17.20 | T1=100 seconds, T2=104 se conds, and ΔT=4 seconds |

According to Table 1.2, while the cover plate 110 is orientated burst, when the D1 is within the set range and meets the performance requirements of the explosion-proof structure, secondary pressure relief is achieved. When the D1 is below or exceeds the set range, the time interval between the two pressures is shorter or longer, and the secondary pressure relief effect of the explosion-proof structure is reduced.

## Claims

1. A cover plate, applied to a battery, **characterized in that** the cover plate comprises:
a body (111) comprising:
a first sub-part (113) adjacent to an edge of the body (111) along a radial direction of the body (111); and
a second sub-part (114) adjacent to the first sub-part (113) and comprising a sinking table (1141) and a boss (1142) connected and located on a same circumference, wherein the second sub-part (114) further comprises a first side surface (1143) and a second side surface (1144) disposed oppositely, and the boss (1142) is higher than the sinking table (1141) and the first sub-part (113) in a direction from the second side surface (1144) to the first side surface (1143); and
an explosion-proof groove (120) comprising a first sub-groove (121) and a second sub-groove (122), wherein the first sub-groove (121) is at least partially located on the sinking table (1141), and the second sub-groove (122) is located on the boss (1142).

2. The cover plate according to claim 1, **characterized in that** the body (111) further comprises a third sub-part (115) concentric with the second sub-part (114), a shape of the third sub-part (115) is circular, and the sinking table (1141) and the boss (1142) are enclosed in a closed ring.

3. The cover plate according to claim 2, **characterized in that** the body (111) further comprises a fourth sub-part (116) located between the second sub-part (114) and the third sub-part (115), a shape of the fourth sub-part (116) is annular, and the fourth sub-part (116) is connected to the second sub-part (114) and the third sub-part (115).

4. The cover plate according to claim 3, **characterized in that** a surface of the first sub-part (113) facing a wound core (140), a surface of the sinking table (1141) facing the wound core (140), and a surface of the fourth sub-part (116) facing the wound core (140) are at a same height; or
the surface of the first sub-part (113) facing the wound core (140) and the surface of the sinking table (1141) facing the wound core (140) are both higher than the surface of the fourth sub-part (116) facing the wound core (140), and the fourth sub-part (116) is configured to contact an electrode of the battery.

5. The cover plate according to claim 2, **characterized in that** a surface of the third sub-part (115) facing the wound core (140) is not lower than a surface of the boss (1142) facing the wound core (140), and a surface of the third sub-part (115) facing away from the wound core (140) is not lower than a surface of the boss (1142) facing away from the wound core (140).

6. The cover plate according to claim 2, **characterized in that** a shape of the explosion-proof groove (120) is a circular ring, an outer diameter of the circular ring where the explosion-proof groove (120) is located is E1, an inner diameter of the second sub-part (114) is E2, an outer diameter of the second sub-part (114) is E3, a diameter of the body (111) is E4, and a thickness of an area on the body (111) other than the explosion-proof groove (120) is C; and
wherein the E1, the E2, the E3, and the E4 satisfy 42 mm≤E4≤46 mm, 0.75*E4≤E3≤0.96*E4, 0.4*E4≤E2≤0.72*E4, 3*C≤E3-E2≤27.8*C, and E2+C ≤E1≤E3-C.

7. The cover plate according to claim 1, **characterized in that** a surface of the first sub-part (113) facing the wound core (140) and a surface of the sinking table (1141) facing the wound core (140) are at a same height, and a surface of the first sub-part (113) facing away from the wound core (140) and a surface of the sinking table (1141) facing away from the wound core (140) are at a same height.

8. The cover plate according to claim 1, **characterized in that** a depth of the sinking table (1141) is A, and the A satisfies 0.8*C≤A≤1.5*C; the C is a thickness of an area on the body (111) other than the explosion-proof groove (120);
optionally, the C satisfies 0.4 mm≤C≤1.0 mm.

9. The cover plate according to claim 1, **characterized in that** a width of a top part of the sinking table (1141) is D1, and a width of a bottom of the sinking table (1141) is D2, a thickness of an area on the body (111) other than the explosion-proof groove (120) is C, and an angle formed between the bottom and a side of the sinking table (1141) is α; and
wherein the D1, the D2, the C, and the α satisfy 4 mm≤D1≤12 mm, D2=D1-2*C*tan (α-90°), D2>2 mm, and 100°≤α≤170°.

10. The cover plate according to any one of claims 1-9, **characterized in that** a thickness of the body (111) at a position of the explosion-proof groove (120) is H, and the H satisfies H=(P*E1)/(4*Q); optionally, 50 µm≤H≤120 µm;
wherein the E1 is an outer diameter of a ring where the explosion-proof groove (120) is located, and the Q is a tensile strength of a material prepared for the cover plate (110).

11. The cover plate according to any one of claims 1-9, **characterized in that** a thickness of the body (111) at a position of the first sub-groove (121) is H1, a thickness of the body (111) at a position of the second sub-groove (122) is H2, and the H1 is less than the H2;
optionally, the H1 and the H2 satisfy 20 µm≤H1≤115 µm, 25µm≤H2≤135 µm, and 5 *µ*m≤H2-H1≤20 µm.

12. The cover plate according to claim 11, **characterized in that** a shape of the explosion-proof groove (120) is a circular ring, and a ratio of an arc length of the first sub-groove (121) to an arc length of the second sub-groove (122) is G; and
wherein the G satisfies 1/20≤G≤1/7.

13. A battery, **characterized in that** the battery comprises a cover plate according to any one of claims 1-12;
a wound core (140) comprising a positive end and a negative end; and
a housing (150), wherein the wound core (140) is installed inside the housing (150), one end of the housing (150) is provided with an opening (151), and the body (111) is sealed and connected to the housing (150) to seal the opening (151);
optionally, the battery further comprises:
a positive terminal (152) disposed at another end of the housing (150) facing away from the body (111);
a first current collector (160) welded to the wound core (140) and disposed between the body (111) and the wound core (140);
a second current collector (170) welded and disposed between the coil wound core (140) and the positive terminal (152); and
an insulating member (180) disposed between the second current collector (170) and the housing (150).

14. A battery pack, **characterized in that** the battery pack comprises a plurality of batteries according to claim 13;
optionally, the battery pack further comprises a mounting base (130) provided with a plurality of mounting grooves (131) and a plurality of baffle plates (132), one end of each of the batteries adjacent to the body (111) is mounted inside a corresponding one of the mounting grooves (131), and each of the baffle plates (132) are located on a side of a corresponding one of the mounting grooves (131) away from the batteries;
wherein the first sub-groove (121) comprises a first groove wall (1211) and a second groove wall (1212) closer to a center of the body (111) than the first groove wall (1211), and a projection of each of the baffle plates (132) on one side of the body (111) is located at one side of the first groove wall (1211) away from the second groove wall (1212).

15. The battery pack according to claim 14, **characterized in that** the mounting base (130) comprises a first sub-plate (133) and a second sub-plate (134) opposite and spaced apart, the mounting grooves (131) are provided on the first sub-plate (133), the baffle plates (132) are located between the first sub-plate (133) and the second sub-plate (134), and the baffle plates (132) are connected to the first sub-plate (133).
